# EUROPEAN PATENT APPLICATION

(11) **EP 1 418 791 A2**
(43) Date of publication of application: **12.05.2004**
(21) Application number: 03257040.0
(22) Date of filing: 07.11.2003
(51) Int. Cl.: H04R 3/00

(54) **Improvements in and relating to audio devices**

(30) Priority: 08.11.2002 SG 200206777; 17.12.2002 US 323347
(71) Applicant: Creative Technology Ltd., Singapore 609921 (SG)
(72) Inventor: Chua, Hiap Chu, Singapore 090114 (SG); Wong, Kok Chay, Singapore 543225 (SG); Suprapmo, Susimin, Singapore 659245 (SG)
(74) Representative: Stevens, Jason Paul

(57) **Abstract**

Apparatus (10) for use with a loud speaker with a volume control function, the apparatus having a recess (22) for releasably receiving an audio device (12), a first connector (16) on the apparatus for electrical connection with a second connector of the audio device (12) to enable functional connectivity between the apparatus (10) and the audio device (12), the apparatus (10) including: (a) a volume control for controlling the volume of the loud speaker, (b) an electrical power connector for supplying electric power to the audio device (12), and (c) at least one functional connection for functional connection with the audio device (12) for establishing a functional relationship between the volume control and the audio device (12), the recess (22) being sized and shaped to receive therein the audio device (12), the recess (22) being of dimensions such that the audio device (12) does not extend beyond edges of the recess (22) when the audio device (12) is functionally engaged in the recess (22) and the first connector (16) and the second connector are engaged.

## Description

### Field of the Invention

This invention relates to improvements in and relating to audio devices and refers particularly, though not exclusively, to audio devices having connectivity for removable audio input devices.

### Background to the Invention

Sound reproducing speaker systems have been developed for use with systems such as, for example, computers having a sound card, and with home theatre systems. Such speaker systems normally include a sub-woofer to reproduce low frequency sounds, the sub-woofer having an amplifier, normally an inbuilt amplifier. Quite often, other speakers are driven by the amplifier through connections on the sub-woofer cabinet. In addition "satellite" speaker systems may be used and which have a volume control. Such satellite systems may or may not have an amplifier.

Furthermore, in recent years there has been a plethora of new products on the market for the reproduction of audio including, but not being limited to, MP3 players, memory modules, CD players, and so forth. Many have dual functionality. All are generally intended to be used with headphones or their equivalent, or to be connected to a computer using standard connection devices such as, for example, USB ports, IEEE1394 connections, and so forth. This can, at times, be awkward, as a user must have access to the connection points on the rear of the computer cabinet. Also, most such systems use a volume control on the speaker cabinets, or the computer, to control the volume of reproduction. This can be inconvenient for users.

It is therefore the principal object of the present invention to provide improvements in audio devices whereby products such as, for example, MP3 players, can be connected to a speaker system.

### Summary of the Invention

With the above and other objects in mind the present invention provides apparatus for use with a sound reproduction device, the apparatus having a means for releasably receiving an audio device, a first connector on the apparatus for electrical connection with a second connector of the audio device to enable functional connectivity between the apparatus and the audio device, the apparatus including: (a) a first control means for controlling a function of the sound reproduction device, (b) an electrical power connector for supplying electric power to the audio device, and (c) at least one functional connection for functional connection with the audio device for establishing a functional relationship between the first control means and the audio device.

The sound reproduction device may be a loud speaker and it may or may not have an amplifier, and the loud speaker may be a sub-woofer. The controlled function may be volume. The amplifier may be built in the sound reproduction device.

The first control means may be a volume control for the sound reproduction device, and the means for releasably receiving the audio device may be a recess in the apparatus. The recess may be sized and shaped to receive therein the audio device, the recess being of dimensions such that the audio device does not extend beyond edges of the recess when the audio device is functionally engaged in the recess and the first connector and the second connector are engaged.

The audio device may be one or more of: an audio player module, and MP3 player, and AM/FM tuner, a wireless headphone transmitter, a wireless speaker transmitter, a wireless speaker receiver, and a wireless remote control unit, and may include a device that has more than one of those functions.

The recess may include a catch pivotally attached to the apparatus for releasably retaining the audio device in the recess.

The apparatus may be a remote volume control unit for the sound reproduction device, and may be connected to the sound reproduction device by a cable. The cable may have a shield, the shield being the antenna for the AM/FM tuner.

The first connector and the second connector may be a USB connection or an IEEE1394 connection. The apparatus may be integral with the sound reproduction device, or may be separate.

In another form the present invention provides a remote control for a sound reproduction device, wherein the remote control is connected to the sound reproduction by a cable, the cable having a shield to act as an antenna for an audio device to be releasably attached to the remote control, the audio device being selected from the group consisting of: an audio player module, and MP3 player, and AM/FM tuner, a wireless headphone transmitter, a wireless speaker transmitter, a wireless speaker receiver, and a wireless remote control unit; the remote control having a means for releasably receiving the audio device, a first connector on the apparatus for electrical connection with a second connector of the audio device to enable functional connectivity between the apparatus and the audio device, the remote control including a first control means for controlling a function of the sound reproduction device

### Description of the Drawings

In order that the invention may be readily understood and put into practical effect, there shall now be described by way of non-limitative example only preferred embodiments of the present invention, the description being with reference to the accompanying illustrative drawings in which:
Figure 1 is a front perspective view of a first aspect of the present invention;
Figure 2 is a front perspective view of a second aspect of the present invention;
Figure 3 is a schematic illustration of a first embodiment of the present invention for use with either or both of the first and second aspects;
Figure 4 is a schematic illustration of a second embodiment of the present invention for use with either or both of the first and second aspects;
Figure 5 is a schematic illustration of a third embodiment of the present invention for use with either or both of the first and second aspects;
Figure 6 is a schematic illustration of a fourth embodiment of the present invention for use with either or both of the first and second aspects;
Figure 7 is a schematic illustration of a fifth embodiment of the present invention for use with either or both of the first and second aspects; and
Figure 8 is a schematic illustration of a sixth embodiment of the present invention for use with either or both of the first and second aspects.

### Description of the Preferred Embodiments

Throughout this description like components have like reference numerals with the addition of a prefix number relevant for the embodiment or aspect being described. For example, 2 for a second aspect or second embodiment.

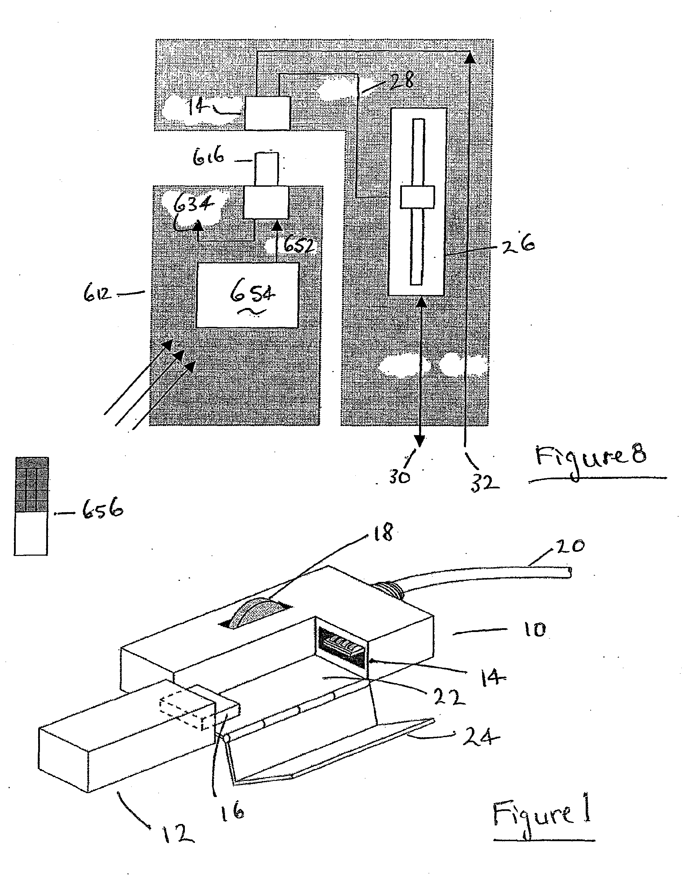

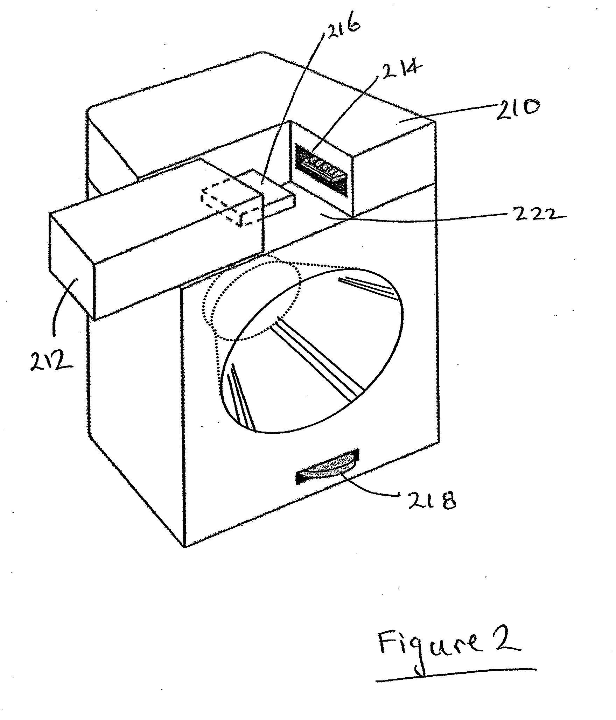

To first refer to Figure 1, there is shown a remote volume control unit 10 having a receptor that is in the form a USB port 14 to which an audio device 12 can be functionally and releasably attached. The interface between the volume control unit 10 and the audio device 12 is by use of the USB port 14 built in to the volume control unit 10. It is a receptor for a USB connector 16 on the audio device 12. However, any other form of connection such as, for example, IEEE1394 may be used, if desired or required.

The volume control unit 10 has a volume-adjusting knob 18 that operates in the usual manner to control the output volume of the audio device 12. It may be connected to a speaker unit (not shown) that may or may not have an amplifier (not shown). Any such amplifier is preferably a built-in amplifier, by either a suitable wireless connection or by a cable 20.

The volume control unit 10 also has a receptor that is in the form of a recess 22 that is preferably sized and shaped to receive the audio device 12 so that the audio device 12 substantially fills the recess 22, but preferably does not exceed or extend beyond the recess 22 in any direction. A catch or cover 24 may be provided and which is hingedly attached to volume control unit 10 so that catch 24 may releasably yet securely hold the audio device 12 in the recess 22. This may prevent unnecessary strain on the port 14/connector 16, particularly as the volume control unit 10 is intended to be operated by a user. There is also the possibility that during the operation by the user the hand of the user may cause the connector 16 to be partially or completely disconnected from port 14. The catch 24 may assist in preventing this.

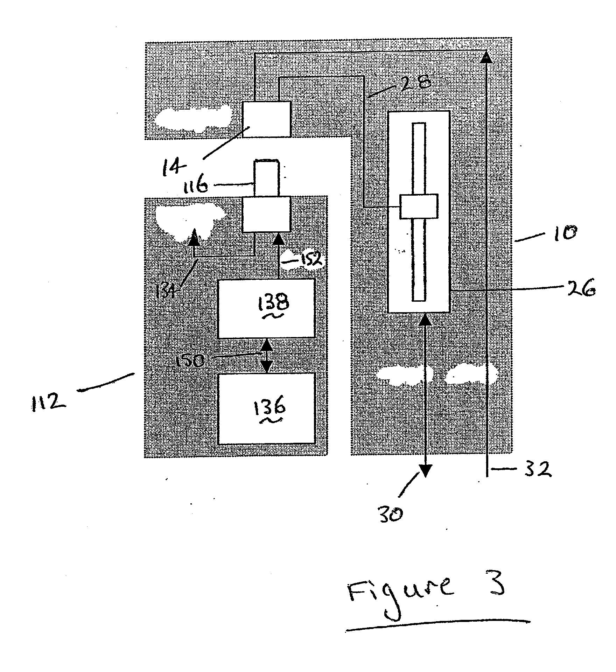

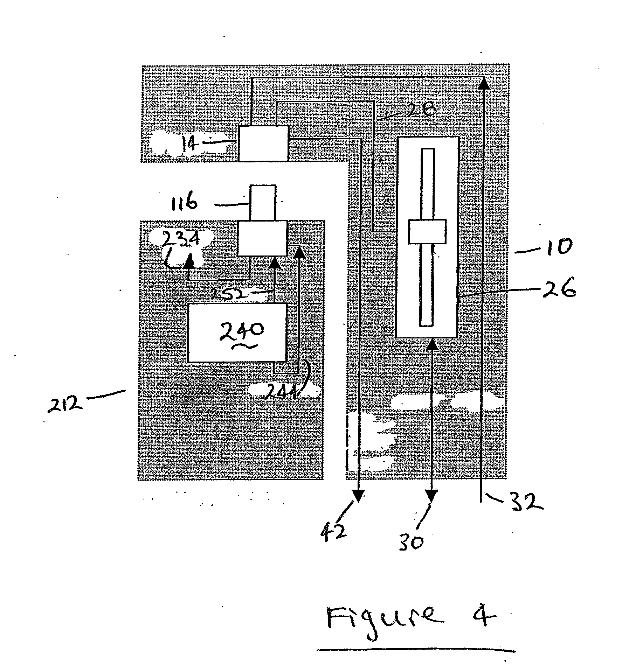

In Figure 2 there is shown a different aspect of the present invention. There is shown a speaker unit 210 that may be a sub-woofer unit or satellite speaker system. The speaker unit 210 has a volume control function, and may or may not have an amplifier (not shown). Any such amplifier is preferably an in-built amplifier. Other speakers may be driven from speaker 210. An audio device 212 can be functionally and releasably attached to a receptor on speaker unit 210. A USB port 214 built-in to the speaker unit 210 acts as a receptor for the audio device 212, and a USB connector 216 on the audio device 212. However, any other form of connection such as, for example, IEEE1394 may be used, if desired or required.

The speaker unit 210 has a volume-adjusting knob 218 that operates in the usual manner to control the output volume of the speaker unit 210. The speaker unit 210 also has a recess 222 that is preferably sized and shaped to receive the audio device 212 so that the audio device 212 substantially fills the recess 222, but preferably does not exceed or extend beyond the recess 22 in any direction. A catch or cover (not shown) may be provided and which is hingedly attached to speaker unit 210 to releasably yet securely hold the audio device 212 in the recess 222. This may prevent unnecessary strain on the port 214/connector 216.

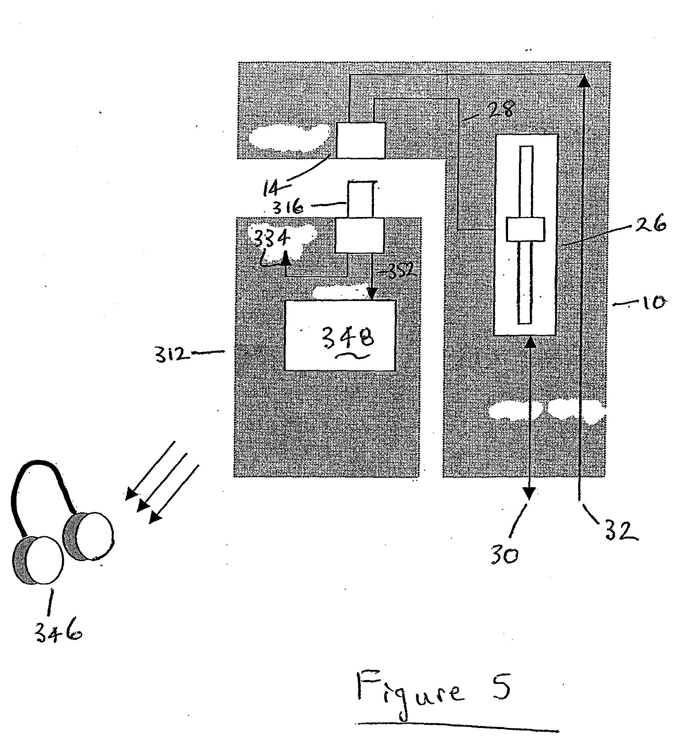

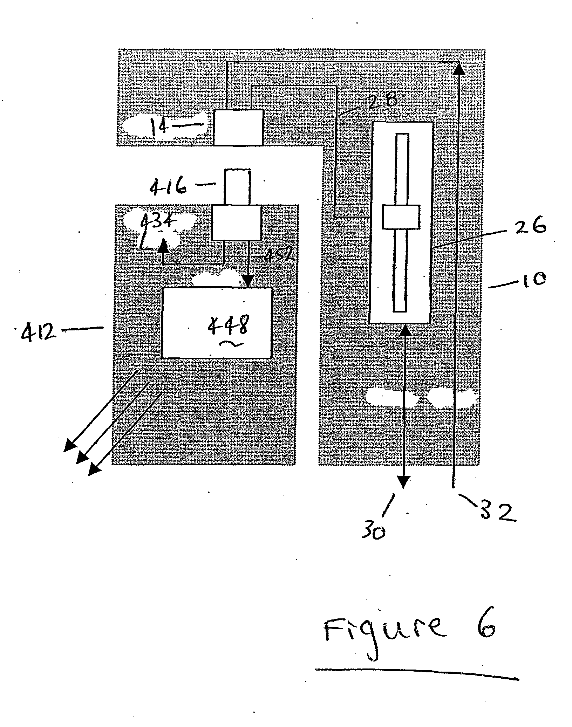

Figure 3 shows a first embodiment for use with the aspects of either or both of Figures 1 and 2. Here the audio device 112 is an audio player such as, for example, an MP3 player. Illustrated is the volume control unit 10, although it may be a speaker unit 210. The unit 10 has a main volume control 26 operated by knob 18. The control 26 is operatively connected to port 14 by an input cable 28, and has an output cable 30 to supply an audio signal to the speaker unit (not shown). A power supply cable 32 from the speaker unit is connected to port 14 to supply power to device 112 when connector 116 is engaged with port 14. This may prevent unnecessary drain on any independent power source for device 112. When connected, a power cable 134 from connector 116 supplies power to device 112 for the operation of device 112. The audio device 112 has a non-volatile memory 136 that supplies an output signal to the audio device controller 138 by cable 150 for supplying an audio signal to connector 116 via cable 152. The audio can then be replayed over the speaker unit(s).

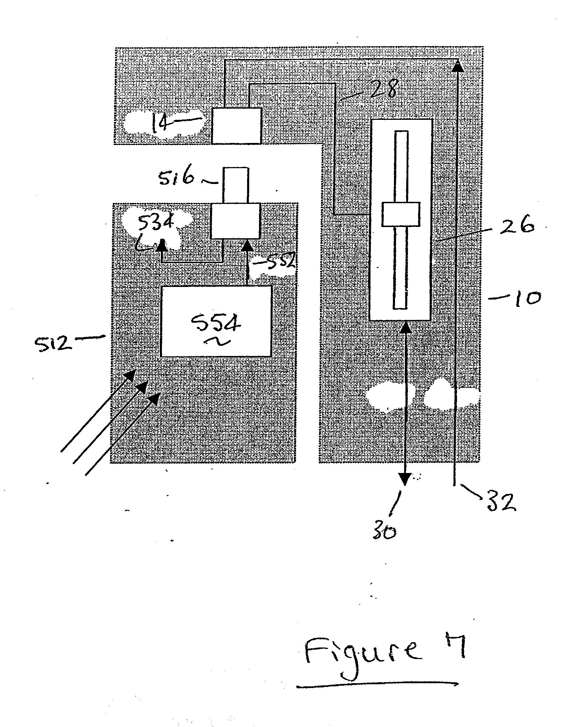

Figure 4 shows a second embodiment for use with the aspects of either or both of Figures 1 and 2. Here the audio device 212 is an audio tuner such as, for example, an AM/FM tuner. Illustrated is the volume control unit 10, although it may be a speaker unit 210. The unit 10 has a main volume control 26 operated by knob 18. The control 26 is operatively connected to port 14 by an input cable 28, and has an output cable 30 to supply an audio signal to the speaker unit (not shown). A power supply cable 32 from the speaker unit is connected to port 14 to supply power to device 212 when connector 216 is engaged with port 214. This may prevent unnecessary drain on any independent power source for device 212. When connected, a power cable 234 from connector 216 supplies power to device 212 for the operation of device 212. The audio device 212 has an AM/FM tuner 240 for supplying an audio signal to connector 216 by cable 252. The audio can then be replayed over the speaker unit(s). The sleeve 42 of cable 20 may be used as an antenna for the AM/FM tuner 240, with sleeve 42 being connected to port 14, and connector 216 having an antenna cable 244 to connect the antenna signal to AM/FM tuner 240.

Figure 5 shows a third embodiment for use with the aspects of either or both of Figures 1 and 2. Here the audio device 312 is a wireless headphone transmitter module for supplying a wireless signal to headphones (or their equivalent) . Illustrated is the volume control unit 10, although it may be a speaker unit 210. The unit 10 has a main volume control 26 operated by knob 18. The control 26 is operatively connected to port 14 by an input cable 28, and has an output cable 30 to supply an audio signal to the speaker unit (not shown). A power supply cable 32 from the speaker unit is connected to port 14 to supply power to device 312 when connector 316 is engaged with port 14. This may prevent unnecessary drain on any independent power source for device 312. When connected, a power cable 334 from connector 316 supplies power to device 312 for the operation of device 312. The audio device 312 has a wireless transmitter 348 that receives an audio input signal from connector 316 via cable 352 for enabling wireless transmitter 348 to supply an audio signal to headphones 346. The audio can then be replayed using the headphones 346.

Figure 6 shows a fourth embodiment that is identical in all respects to that of Figure 5, except that the output from wireless transmitter 448 is sent to a speaker unit (not shown).

Figure 7 shows a fifth embodiment that is identical in all respects to those of Figures 5 and 6, except that there is provided a wireless receiver 554 to receive a signal from a wireless transmitter unit (such as that of Figure 6) to supply an audio signal to a speaker unit (not shown).

Figure 8 shows a sixth embodiment that is identical in all respects to that of Figure 7, except that the wireless receiver 654 to receive a control from a wireless transmitter unit 656 to supply a control signal to a volume control 626 and other functions (such as, for example, ON/OFF, treble, bass, balance, and so forth) of a speaker unit (not shown). This enables the speaker unit to easily be converted to a wireless operation.

Whilst there has been described in the forgoing description preferred embodiments and aspects of the present invention, it will be understood by those skilled in the technology that many variations in details of design or construction may be made without departing from the present invention.

The present invention extends to all features disclosed both individually, and in all possible permutations and combinations.

## Claims

1. Apparatus for use with a sound reproduction device, the apparatus having a receptor for releasably receiving an audio device, a first connector on the apparatus for electrical connection with a second connector of the audio device to enable functional connectivity between the apparatus and the audio device, the apparatus including:
(a) a control unit for controlling a function of the sound reproduction device,
(b) an electrical power connector for supplying electric power to the audio device, and
(c) at least one functional connection for functional connection with the audio device for establishing a functional relationship between the control unit and the audio device.

2. Apparatus as claimed in claim 1, wherein the sound reproduction device is a loud speaker and the function is volume of sound.

3. Apparatus as claimed in claim 2, wherein the loud speaker is selected from the group consisting of: a sub-woofer, and a satellite speaker system.

4. Apparatus as claimed in any one of claims 1 to 3, wherein an amplifier is built into the sound reproduction device.

5. Apparatus as claimed in any one of claims 1 to 4, wherein the control unit is a volume control for the sound reproduction device.

6. Apparatus as claimed in any one of claims 1 to 5, wherein the receptor for releasably receiving an audio device is a recess in the apparatus.

7. Apparatus as claimed in claim 6, wherein the recess is sized and shaped to receive therein the audio device, the recess being of dimensions such that the audio device does not extend beyond edges of the recess when the audio device is functionally engaged in the recess and the first connector and the second connector are engaged.

8. Apparatus as claimed in any one of claims 1 to 7, wherein the audio device is selected from the group consisting of: an audio player module, and MP3 player, and AM/FM tuner, a wireless headphone transmitter, a wireless speaker transmitter, a wireless speaker receiver, and a wireless remote control unit.

9. Apparatus as claimed in any one of claims 1 to 8, wherein the receptor includes a catch pivotally attached to the apparatus and being for releasably retaining the audio device in the receptor.

10. Apparatus as claimed in any one of claims 1 to 9, wherein the apparatus is includes a remote volume control unit for the sound reproduction device.

11. Apparatus as claimed in claim 10, wherein the remote control volume unit is connected to the sound reproduction device by a cable.

12. Apparatus as claimed in claim 11, wherein the cable includes a shield, the shield being the antenna for the AM/FM tuner.

13. Apparatus as claimed in any one of claims 1 to 12, wherein the first connector and the second connector comprise at least one selected from the group consisting of: USB connection, and IEEE1394 connection.

14. Apparatus as claimed any of the preceding claims, wherein the apparatus is integral with the sound reproduction device.

15. A remote control for a sound reproduction device, wherein the remote control is connected to the sound reproduction by a cable, the cable having a shield to act as an antenna for an audio device to be releasably attached to the remote control, the audio device being selected from the group consisting of: an audio player module, and MP3 player, and AM/FM tuner, a wireless headphone transmitter, a wireless speaker transmitter, a wireless speaker receiver, and a wireless remote control unit; the remote control having a receptor for releasably receiving an audio device, a first connector on the apparatus for electrical connection with a second connector of the audio device to enable functional connectivity between the apparatus and the audio device, the remote control including a control unit for controlling a function of the sound reproduction device.

16. Apparatus for use with a sound reproduction device, the apparatus having a unit to which an audio device can be releasably attached, a first connector on the apparatus and positioned to electrically connect with a second connector of the audio device to enable functional connectivity between the apparatus and the audio device, the apparatus including:
(a) a first control unit capable of controlling a function of the sound reproduction device;
(b) an electrical power connector to supply electric power to the audio device; and
(c) at least one functional connection with the audio device to establish a functional relationship between the first control unit and the audio device.
